# EUROPÄISCHE PATENTANMELDUNG

(11) **EP 2 555 300 A1**
(43) Veröffentlichungstag der Anmeldung: **06.02.2013**
(21) Anmeldenummer: 12005687.4
(22) Anmeldetag: 02.08.2012
(51) Int. Cl.: H01M 8/04, H01M 8/06

(54) **Brennstoffzellensystem**

(30) Priorität: 02.08.2011 DE 102011109105
(71) Anmelder: EnyMotion GmbH, 74078 Heilbronn (DE)
(72) Erfinder: Wieland, Steffen, 74078 Heilbronn (DE); Seyfang, Bernhard, 73114 Schlat (DE)
(74) Vertreter: Prinz & Partner

(57) **Zusammenfassung**

Ein Brennstoffzellensystem hat wenigstens eine Brennstoffzelle (12), einen Reformer (14) zur Erzeugung eines wasserstoffhaltigen Gases aus einem Brennstoff, einen der Brennstoffzelle (12) nachgeschalteten Brenner (16) zur thermischen Umsetzung von Abgasen der Brennstoffzelle (12). Ein erster Wärmetauscher (20) ist dem Reformer (14) vorgeschaltet und dem Brenner (16) nachgeschaltet, in dem ein Wärmeübergang von Abgasen stromabwärts des Brenners (16) zu Edukten stromaufwärts des Reformers (14) erfolgt, und ein zweiter Wärmetauscher (22) ist dem Reformer (14) nachgeschaltet und dem Brenner (16) vorgeschaltet, in dem ein Wärmeübergang von Produktgasen stromabwärts des Reformers (14) zu dem Brenner (16) zugeführten Gasen stromaufwärts des Brenners (16) erfolgt.

## Beschreibung

Die Erfindung betrifft ein Brennstoffzellensystem.

Brennstoffzellensysteme erlauben es, elektrische Energie auf chemischem Weg zu gewinnen. Als Ausgangsstoff für den Wasserstoff, der in der Brennstoffzelle zur Gewinnung von elektrischer Energie umgesetzt wird, dienen beispielsweise kohlenwasserstoffhaltige Brennstoffe wie etwa Flüssiggas (LPG). Es bietet sich an, Brennstoffzellensysteme abseits bestehender elektrischer Stromnetze einzusetzen. Dazu sind portable Systeme erwünscht, die natürlich so kompakt wie möglich gestaltet sein sollen und dabei die höchstmögliche Effizienz aufweisen sollen.

Aufgabe der Erfindung ist es, ein kompaktes Brennstoffzellensystem mit einer integrierten Wasserstofferzeugung mit einem hohen Wirkungsgrad zu schaffen.

Hierzu weist ein Brennstoffzellensystem mit wenigstens einer Brennstoffzelle, einem Reformer zur Erzeugung eines wasserstoffhaltigen Gases aus einem Brennstoff und einem der Brennstoffzelle nachgeschalteten Brenner zur thermischen Umsetzung von Abgasen der Brennstoffzelle einen ersten Wärmetauscher auf, der dem Reformer vorgeschaltet und dem Brenner nachgeschaltet ist und in dem ein Wärmeübergang von Abgasen stromabwärts des Brenners zu Edukten stromaufwärts des Reformers erfolgt, sowie einen zweiten Wärmetauscher, der dem Reformer nachgeschaltet und dem Brenner vorgeschaltet ist und in dem ein Wärmeübergang von Produktgasen stromabwärts des Reformers zu dem Brenner zugeführten Gasen stromaufwärts des Brenners erfolgt. Auf diese Weise kann die im System erzeugte Wärme optimal zur Vorheizung der in den Reformer bzw. den Brenner eingehenden Gasströme eingesetzt werden. Diese Gestaltung der Wärmetauscher erlaubt eine räumlich sehr dichte Anordnung der Wärmetauscher, des Reformers und des Brenners, was den Platzbedarf im Brennstoffzellensystem minimiert.

Die Edukte umfassen bevorzugt den Brennstoff, eventuell extern zugeführtes Wasser und Luft.

Der Reformer und der Brenner sind vorzugsweise so angeordnet, dass ein Festkörper-Wärmeübergang unmittelbar vom Brenner zum Reformer erfolgt. Auf diese Weise kann der Brenner direkt zur Heizung des Reformers eingesetzt werden. Die unmittelbare räumliche Nähe der beiden Bauteile zueinander macht außerdem das Brennstoffzellensystem kompakter. Durch eine derart optimierte Wärmeführung und die Nutzung der Abwärme, die beim Reformierungsprozess als auch bei der Verbrennung der wasserstoffhaltigen Abgase entsteht, lässt sich der Wirkungsgrad des Reformers steigern. Es hat sich herausgestellt, dass ein Wirkungsgrad von 85 bis 90 % erreicht werden kann (definiert als Quotient zwischen dem Brennwert des vom Reformer erzeugten Reformatgases und dem Brennwert des als Edukt zugeführten Brennstoffs).

Die beiden Wärmetauscher, der Reformer und der Brenner sind vorzugsweise so ausgebildet und angeordnet, dass Reformer und Brenner in einem thermischen Gleichgewicht auf ihrer optimalen Betriebstemperatur gehalten werden können, ohne dass Brennstoff eigens dafür eingesetzt werden müsste, Reformer oder Brenner zu heizen.

Dies gilt für den Nennbetrieb des Brennstoffzellensystems, in dem alle Komponenten ihre optimale Betriebstemperatur erreicht haben und die Brennstoffzelle elektrische Energie liefert. Der Reformer liefert dann Reformatgas in optimaler Zusammensetzung, vor allem hinsichtlich des Gehalts an Wassersoff und Kohlenmonoxid. Für eine Anfahrphase des Systems, in der die Komponenten des Systems noch nicht ihre Betriebstemperatur erreicht haben und insbesondere die Zusammensetzung des vom Reformer gelieferten Reformatgases noch von der optimalen Zusammensetzung abweicht, ist es möglich, den Reformer zusätzlich zu beheizen, beispielsweise durch eine zusätzliche Heizung, etwa in Form einer elektrisch betriebenen Heizpatrone. Die zusätzliche Heizung kann beispielsweise konzentrisch außen um die Reformerkammer angeordnet sein.

Der Festkörper-Wärmeübergang vom Brenner zum Reformer kann so verwirklicht sein, dass der Reformer eine Reformerkammer aufweist, in der die Umsetzung des Brennstoffs erfolgt, und der Brenner eine Brennerkammer aufweist, in der die Umsetzung des Abgases der Brennstoffzelle erfolgt, wobei der Reformer und der Brenner räumlich so zueinander angeordnet sind, dass Reformerkammer und Brennerkammer aneinander angrenzen.

In diesem Fall bilden Brenner und Reformer vorzugsweise ein einziges Bauteil, und eine oder mehrere Wandungen von Reformerkammer und Brennerkammer sind wenigstens abschnittsweise identisch.

Die Reformerkammer kann beispielsweise konzentrisch um die Brennerkammer angeordnet sein. Diese Gestaltung sorgt für eine sehr kompakte Bauweise und einen optimalen Wärmeübergang vom Brenner zum Reformer.

Es ist auch möglich, umgekehrt die Brennerkammer konzentrisch um die Reformerkammer anzuordnen. Andere Gestaltungen mit mehreren Kanälen, die abwechselnd der Brennerkammer und der Reformerkammer zugeordnet sind, wären auch denkbar.

Der erste Wärmetauscher kann durch einen Einströmbereich des Reformers und einen Ausströmbereich des Brenners und der zweite Wärmetauscher durch einen Ausströmbereich des Reformers und einen Einströmbereich des Brenners gebildet sein. In diesem Fall wären der erste Wärmetauscher durch einen der Endabschnitte und der zweite Wärmetauscher durch den anderen Endabschnitt der Reformer-Brenner-Kombination gebildet. Alle vier funktionalen Bauteile (erster und zweiter Wärmetauscher, Reformer und Brenner) lassen sich so in einem einzigen Bauteil kombinieren.

Die Strömungen durch den Reformer und durch den Brenner sind dabei vorzugsweise im Wesentlichen gegenläufig gerichtet. Vorteilhaft verlaufen die Strömungen parallel zueinander. Dies wird erreicht, indem die Reformer- und Brennerkammern bzw. die Leitungen in den Wärmetauschern so angeordnet sind, dass der Strömungsverlauf von Brennstoff und Abgas größtenteils parallel ist.

Es ist jedoch auch möglich, Reformer- und Brennerkammern so anzuordnen, dass die Strömungen durch den Reformer und durch den Brenner im Wesentlichen senkrecht zueinander gerichtet sind. Auch alle Zwischenformen sind natürlich denkbar.

Bevorzugt ist ein dritter Wärmetauscher vorgesehen, der stromabwärts des Reformers angeordnet ist und dessen Wärmeübertrag einstellbar ist. Der dritte Wärmetauscher dient vor allem dazu, das Reformatgas stromabwärts des Reformers herunterzukühlen, bevor dieses in eine dem Reformer nachgeschaltete Reinigungsstufe geleitet wird. In der Reinigungsstufe wird dabei der CO-Gehalt des Reformatgases reduziert. Hierbei kann eine selektive Oxidation, eine selektive Methanisierung, ein Wasser-Gas-Shift oder ein anderes bekanntes Verfahren verwendet werden. Es können auch mehrere Reinigungsstufen hintereinander geschaltet werden. Diese Reinigungsverfahren werden üblicherweise bei Temperaturen im Bereich von 100 bis 400 °C durchgeführt, während das Reformatgas den Reformer mit Temperaturen von 600 bis 800 °C verlässt (wenn der Reformer mit dem Verfahren der autothermen Reformierung betrieben wird). Durch den einstellbaren Wärmeübertrag kann das Reformatgas auf einfache Weise auf eine für die Reinigungsstufe verträgliche Temperatur heruntergekühlt werden, ohne die Parameter für den Reformer, den Brenner oder den ersten bzw. zweiten Wärmetauscher verändern zu müssen.

Der dritte Wärmetauscher kann aufgrund seines einstellbaren Wärmeübertrags auch dazu verwendet werden, die Temperaturen im gesamten Brennstoffzellensystem auf optimale Werte einzustellen.

Der dritte Wärmetauscher ist vorzugsweise mit einer Kühlvorrichtung mit einstellbarer Kühlleistung verbunden, beispielsweise einem Lüfter mit regelbarer Leistung, der Umgebungsluft um die das Reformatgas führenden Leitungen bläst. Andere Kühlvorrichtungen sind natürlich auch einsetzbar.

Vorteilhaft ist wenigstens ein Temperatursensor stromabwärts des dritten Wärmetauschers vorgesehen, aufgrund dessen Daten die Kühlleistung der Kühlvorrichtung eingestellt wird. Beispielsweise kann der dritte Wärmetauscher nur dann zugeschaltet werden, wenn das Reformatgas zu heiß ist.

Bevorzugt ist eine Steuerung vorgesehen, die eine Temperatur im Reformer und/oder im Brenner erfasst, sowie Dosiervorrichtungen, die eine Dosierung der einzelnen, dem Reformer zugeführten Komponenten erlauben, so dass der Brennstoff stets vollständig gasförmig in den Reformer gelangt.

In einer bevorzugten Variante weist der erste Wärmetauscher wenigstens zwei Leitungen zur Zufuhr von Brennstoff, Luft und/oder Wasser zum Reformer auf, wobei in der Leitung, durch die Brennstoff zugeführt wird, eine niedrigere Temperatur herrscht als in der Leitung, durch die nur Luft und/oder Wasser geführt wird. Es können auch mehrere Leitungen zum Zuführen von Brennstoff ausgelegt sein.

Beispielsweise ist eine Brennstoffzuleitung, durch die Brennstoff zugeführt wird, konzentrisch in einer Leitung angeordnet, durch die nur Luft und/oder Wasser zugeführt wird.

Die Temperaturdifferenz kann beispielsweise durch das Vorsehen eines schlecht wärmeleitenden Materials an der Wandung der Brennstoffzuleitung erreicht werden, das den Wärmeübertrag vom heißen Medium auf die zu erwärmenden Stoffe begrenzt. Beispielsweise ist es möglich, innerhalb einer Leitung ein zusätzliches Keramikrohr einzusetzen, oder das Rohr doppelwandig mit einem Luft- oder Vakuumspalt auszubilden oder einfach eine größere Wandstärke der Leitung zu wählen.

Zum Verdampfen des Brennstoffs und Einbringen in die Leitung kann in der Leitung eine Brennstoffzuleitung z.B. in Form eines Einleitungsrohres angeordnet sein, die im Inneren der Leitung gelegene Öffnungen aufweist, durch die der Brennstoff in den Strom der anderen Edukte in der Leitung gelangt.

Mit den genannten Maßnahmen lässt sich auf einfach Weise erreichen, dass der Brennstoff stets vollständig verdampft, aber noch nicht chemisch zersetzt zum Reformer gelangt.

Es kann außerdem eine Kathodenabgasrückführung von der Kathode der Brennstoffzelle zum Reformer vorgesehen sein, wie dies für Brennstoffzellensysteme bekannt ist. Das gesamte Abgas oder ein vorzugsweise in seiner Zusammensetzung unverändertes Teilvolumen des aus der Kathode austretenden Abgases kann zum Reformer zurückgeleitet werden, insbesondere, um das darin enthaltene Wasser im System wiederzuverwerten. In diesem Fall zählt auch das Kathodenabgas zu den dem Reformer zugeführten Edukten und kann ebenfalls im ersten Wärmetauscher vorgeheizt werden.

Die Erfindung wird nachfolgend anhand eines Ausführungsbeispiels mit Bezug auf die beigefügten Zeichnungen näher beschrieben. In den Zeichnungen zeigen:
- Figur 1 eine schematische Darstellung eines erfindungsgemäßen Brennstoffzellensystems;
- Figur 2 eine schematische Schnittansicht einer integrierten Baugruppe aus einem ersten und einem zweiten Wärmetauscher sowie einem Reformer und einem Brenner eines erfindungsgemäßen Brennstoffzellensystems;
- Figuren 3 und 4 eine Variante des ersten Wärmetauschers in zwei schematischen Schnittansichten; und
- Figur 5 eine schematische Schnittansicht einer integrierten Baugruppe aus einem ersten und einem zweiten Wärmetauscher sowie einem Reformer und einem Brenner eines erfindungsgemäßen Brennstoffzellensystems gemäß einer Variante.

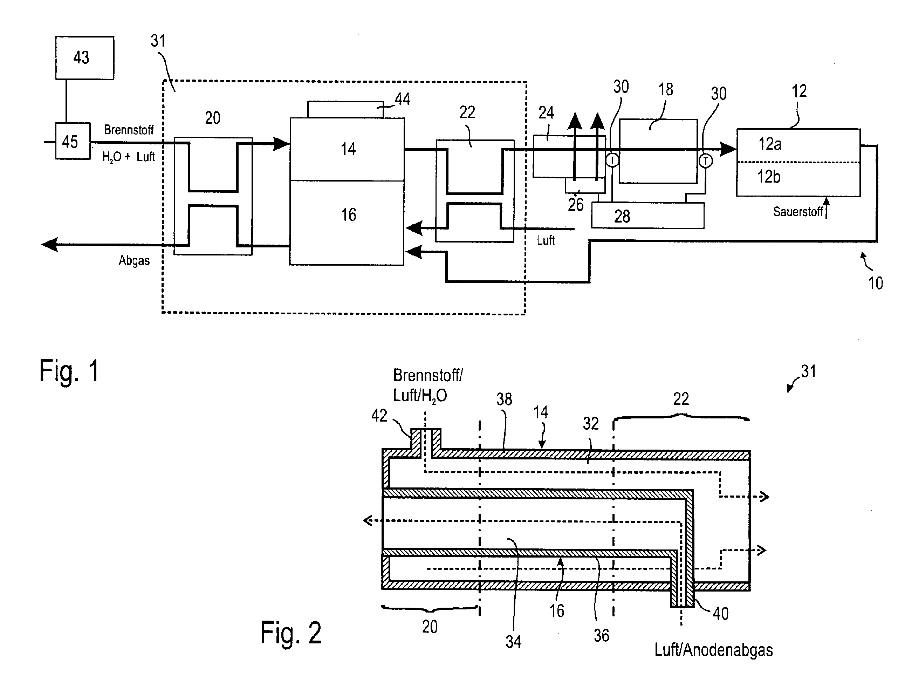

Das in Figur 1 gezeigte Brennstoffzellensystem 10 weist eine oder mehrere Brennstoffzellen 12 auf, wobei vorzugsweise ein ganzer Stapel von Brennstoffzellen vorgesehen ist, von denen aus Übersichtsgründen hier nur eine Einzige dargestellt ist. Die Brennstoffzelle 12 ist unterteilt in eine Anode 12a und eine Kathode 12b. Der Kathode 12b wird Sauerstoff zugeführt, hier über Zufuhr von Umgebungsluft. Der Anode 12a wird ein wasserstoffhaltiges Gas zugeführt, das in einem Reformer 14 aus einem Brennstoff, hier Flüssiggas, erzeugt wird. Neben dem Brennstoff werden dem Reformer 14 auch Wasser und Luft zugeführt, die benötigt werden, um den Brennstoff in einer autothermen Reformierung in wasserstoffhaltiges Gas umzusetzen. Der Reformer 14 könnte natürlich auch nach dem Prinzip der Dampfreformierung oder der partiellen Oxidation betrieben werden.

Die Abgase der Anode 12a, die immer noch ca. 3% Wasserstoff enthalten, werden einem katalytischen Brenner 16 zugeführt, wo sie unter Zufuhr von Luft und Erzeugung von Wärme vollständig verbrannt werden. Anschließend wird das Abgas in die Umgebung des Brennstoffzellensystems 10 abgeführt.

Es kann eine hier nicht dargestellte Rückführleitung vorgesehen sein, über die die Abluft der Kathode 12b zum Reformer 14 geleitet wird. Das Edukt "Luft" umfasst dann optional auch Kathodenabluft und nicht nur Umgebungsluft.

Bevor das Reformatgas zur Brennstoffzelle 12 gelangt, passiert es noch eine Reinigungsstufe 18, die stromabwärts des Reformers 14 und stromaufwärts der Brennstoffzelle 12 angeordnet ist. Bei der Reinigungsstufe 18 kann es sich beispielsweise um eine Vorrichtung handeln, in der mittels selektiver Oxidation, selektiver Methanisierung oder Wasser-Gas-Shift der CO-Gehalt des Reformatgases auf einen für die Brennstoffzelle 12 verträglichen Wert reduziert wird.

Stromaufwärts des Reformers 14 ist ein erster Wärmetauscher 20 angeordnet, durch den die Zuleitung für die Edukte wie Brennstoff, Wasser und Luft zum Reformer 14 sowie die Abluftleitung stromabwärts des Brenners 16 verlaufen. Dies ist in Figur 1 schematisch durch die mit Pfeilen angedeuteten Gasströmungen dargestellt. Im ersten Wärmetauscher 20 erfolgt ein Wärmeübertrag vom heißen Abgas des Brenners 16 auf die kalten Edukte, die dem Reformer 14 zugeführt werden. Als Resultat wird das Abgas des Brenners 16 gekühlt sowie das Eduktgas für den Reformer 14 vorgeheizt.

Nach Passieren des ersten Wärmetauschers 20 und vor dem Eintritt in den Reformer 14 beträgt die Temperatur des Gases in diesem Beispiel etwa 420 - 500 °C.

Stromabwärts des Reformers 14 ist ein zweiter Wärmetauscher 22 angeordnet, durch den die vom Reformer 14 kommende Leitung und die Luftzuleitung zum Brenner 16 verlaufen. Im zweiten Wärmetauscher 22 wird Wärme vom heißen Reformatgas stromabwärts des Reformers 14 an die dem Brenner 16 zugeleitete Luft übertragen. Als Resultat wird das Reformatgas gekühlt und die dem Brenner 16 zugeführte Luft vorgewärmt.

Es ist möglich, auch die Abgase der Anode 12a durch den zweiten Wärmetauscher 22 zu leiten, meist ist es aber nicht notwendig, da diese bereits die nötige Temperatur haben.

Stromabwärts des zweiten Wärmetauschers 22 und stromaufwärts der Reinigungsstufe 18 ist ein dritter Wärmetauscher 24 angeordnet, der vom Reformatgas durchströmt wird. Der dritte Wärmetauscher 24 ist hier luftgekühlt, wobei der Wärmeübertrag über eine regelbare Kühlvorrichtung 26 einstellbar ist. Bei der regelbaren Kühlvorrichtung 26 handelt es sich hier um einen elektrisch betriebenen Lüfter mit veränderbarer Lüfterleistung. Die Kühlvorrichtung 26 ist mit einer Regelung 28 sowie zwei Temperatursensoren 30 verbunden. Einer der Temperatursensoren 30 ist stromaufwärts der Reinigungsstufe 18 und stromabwärts des dritten Wärmetauschers 24 angeordnet, während der zweite Temperatursensor 30 stromabwärts der Reinigungsstufe 18 und stromaufwärts der Anode 12a der Brennstoffzelle 12 angeordnet ist. Aufgrund der Messdaten der Temperatursensoren 30 stellt die Regelung 28 die Kühlwirkung der Kühlvorrichtung 26 ein. Dabei erfolgt die Einstellung so, dass das Reformatgas auf verträgliche Temperaturen für die Reinigungsstufe 18 und die Brennstoffzelle 12 heruntergekühlt wird. Das Reformatgas verlässt den zweiten Wärmetauscher 22 mit einer Temperatur von ca. 450 bis 600 °C. Im dritten Wärmetauscher 24 kann das Reformatgas auf Temperaturen von 100 bis 400 °C heruntergekühlt werden.

Der erste Wärmetauscher 20, der zweite Wärmetauscher 22, der Reformer 14 und der Brenner 16 sind in einem einzigen Bauteil 31 zusammengefasst, das in Figur 2 näher dargestellt ist und das vorzugsweise durch ein eigenes Außengehäuse abgegrenzt ist.

Der Reformer 14 weist eine Reformerkammer 32 auf, während der Brenner 16 eine Brennerkammer 34 besitzt. Die Reformerkammer 32 ist konzentrisch um die Brennerkammer 34 angeordnet, wobei die Außenwand 36 der rohrförmigen Brennerkammer 34 gleichzeitig die radial innenliegende Wand der Reformerkammer 32 bildet. Die radial außenliegende Wand 38 der Reformerkammer 32 ist ebenfalls rohrförmig gestaltet. Durch die gemeinsame Wand 36 erfolgt ein Festkörper-Wärmeübergang vom Brenner 16 zum Reformer 14, so dass der Reformer 14 direkt vom Brenner 16 beheizt wird.

Die Brennerkammer 34 hat eine radial angesetzte Zuleitung 40 für Luft bzw. Anodenabgas. Die Zuleitung liegt in Figur 2 am rechten Ende der Brennerkammer 34.

Der Reformer 14 hat eine radial angesetzte Zuleitung 42, die am in Figur 2 linken Ende der Reformerkammer 32 angeordnet ist. Durch die Zuleitung 42 wird ein Gemisch aus Brennstoff, Luft und Wasser in dem für den Reformierungsprozess benötigten Mengenverhältnis zum Reformer 14 zugeführt.

Die Brennerkammer 34 ist an ihrem in Figur 2 rechten Ende in der Nähe der Zuleitung 40 verschlossen. Die Reformerkammer 32 ist an ihrem linken Ende in der Nähe der Zuleitung 42 verschlossen. An den gegenüberliegenden axialen Enden von Brennerkammer 34 und Reformerkammer 32 sind jeweils Ausströmöffnungen für das Abgas des Brenners 16 bzw. das Reformatgas ausgebildet. Die Brennerkammer 34 und die Reformerkammer 32 werden parallel gegenläufig durchströmt. Der Strömungsverlauf ist in Figur 2 durch gestrichelte Pfeile angedeutet.

Die Wandungen 36, 38 sowie vorteilhaft das gesamte Bauteil 31 bestehen aus einer geeigneten Keramik oder einem geeigneten Metall.

Die gegenläufig durchströmten axialen Endabschnitte der Reformerkammer 32 und der Brennerkammer 34 bilden den ersten Wärmetauscher 20 bzw. den zweiten Wärmetauscher 22. Der erste Wärmetauscher 20 ist dabei von dem Abschnitt der Reformerkammer 32, in den über die Zuleitung 42 der Brennstoff in die Reformerkammer 32 einströmt bzw. das Brennerabgas die Brennerkammer 34 verlässt, gebildet. Der zweite Wärmetauscher 22 ist von dem Abschnitt der Reformerkammer 32 gebildet, durch den das Reformatgas die Baugruppe verlässt, und von dem Teil der Brennerkammer 34, die mit der Zuleitung 40 verbunden ist.

Durch diese kompakte Anordnung und die direkte Wärmeübertragung wird erreicht, dass der Brenner 16 im Nennbetrieb des Brennstoffzellensystems 10 die gesamte Wärmeenergie aufbringen kann, die extern zum Betrieb der autothermen Reformierung im Reformer 14 zugeführt werden muss.

Das gesamte Bauteil 31 weist in diesem Beispiel lediglich eine Länge von ca. 20 cm auf, ist also sehr kompakt.

Der dritte Wärmetauscher 24 kann dazu eingesetzt werden, über die Änderung der Temperatur des Reformatgases und die damit verbundene Änderung des Wärmeübertrags an die dem Brenner 16 zugeführte Luft im zweiten Wärmetauscher 22 in einem gewissen Maß die Temperatur im gesamten Brennstoffzellensystem 10 einzustellen und so für optimale Temperaturen im Bauteil 31 zu sorgen.

Sowohl im Reformer 14 als auch im Brenner 16 wird dabei die Aufrechterhaltung des thermischen Gleichgewichts durch die Auswahl der geeigneten Katalysatoren unterstützt.

Zum Vorheizen des Reformers 14 in der Anfahrphase des Brennstoffzellensystems 10 ist eine zusätzliche Heizung 44 vorgesehen, hier in Form einer elektrisch betriebenen Heizpatrone, die den Reformer 14 im mittleren Bereich der Reformerkammer 32 konzentrisch umgibt (in Figur 1 angedeutet).

Es ist möglich, den ersten Wärmetauscher 20 auch zum Verdampfen von Brennstoff oder Wasser einzusetzen, sodass dem Reformer 14 alle Edukte im gasförmigen Zustand zugeführt werden.

Hierzu erfolgt eine separate Regelung der Zufuhr der Einzelkomponenten (Brennstoff, Luft und Wasser). Die Dosierung der jeweiligen Komponenten erfolgt hier in Abhängigkeit von der aktuellen Temperatur im Reformer 14 und/oder im Brenner 16. Auch eine konstante Vormischung der Komponenten und eine Regelung des Gemischflusses zum Reformer 14 wäre denkbar. Die Regelung wird über eine Steuerung 43 vorgenommen, die mit Dosiervorrichtungen 45 für die einzelnen Komponenten (Luft, Wasser, Brennstoff) verbunden ist.

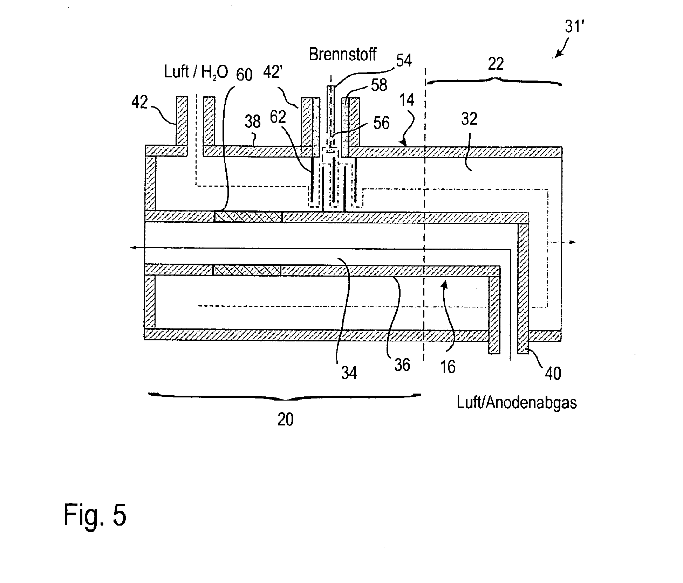

Luft und/oder Wasser und Brennstoff können über getrennte Leitungen 42, 42' zugeführt werden (siehe Fig. 5). Insbesondere in der Leitung 42' kann aber auch die Zufuhr sämtlicher Edukte so integriert sein, dass die Brennstoffzuleitung 54 in die hier konzentrisch um diese angeordnete Luft/Wasser-Zuleitung mündet, bevor diese in die Reformerkammer 32 übergeht.

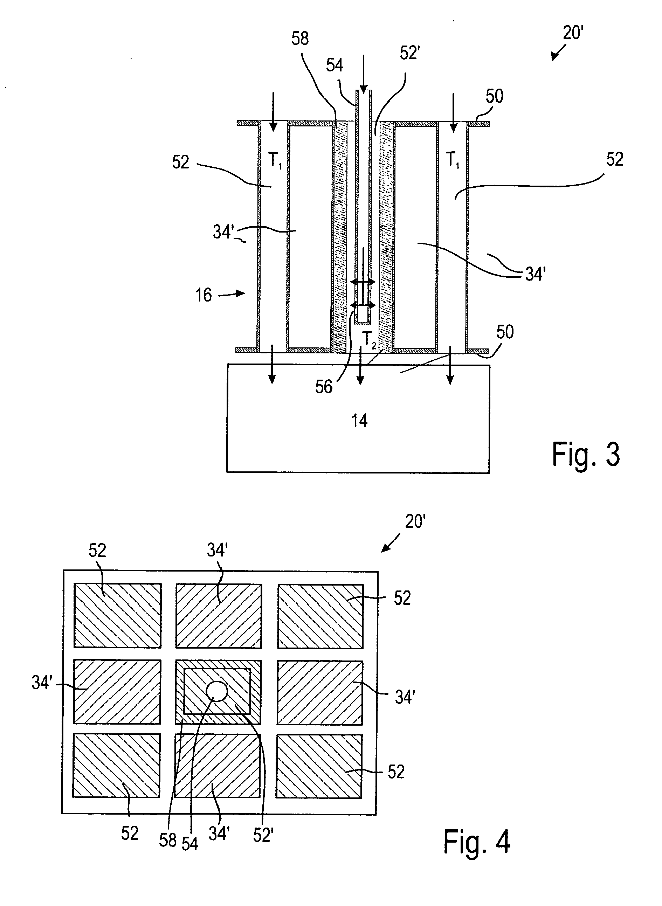

Die Figuren 3 und 4 zeigen eine zweite Ausführungsform des ersten Wärmetauschers 20'. Dieser kann auch mit dem oben beschriebenen System verwendet werden und lässt sich auch mit dem Brenner 16, dem Reformer 14 und, dem zweiten Wärmetauscher 22 zu einem Bauteil 31 zusammenfassen, was in Figur 5 näher dargestellt ist.

Der Wärmetauscher 20' ist im Beispiel der Figuren 3 und 4 ein Rohrbündelwärmetauscher, der zwischen zwei Stirnwänden 50 mehrere, abwechselnd nebeneinander angeordnete, von zu erhitzendem bzw. zu kühlendem Medium durchströmte Leitungen aufweist. Beispielsweise können die von heißem (zu kühlenden) Medium durchströmten Leitungen Kammern 34' des Brenners 16 sein bzw. von dessen Abgas durchströmt sein. Die anderen Leitungen 52 führen vorzuwärmende Luft bzw. Wasser und Brennstoff zum Reformer 14.

Der Reformer 14 kann sich direkt an den Wärmetauscher 20' anschließen, wie in Figur 3 angedeutet ist.

Eine der Leitungen 52 (in den Figuren 3 und 4 die mittlere Leitung 52') ist für die Zufuhr von Brennstoff mit einer Brennstoffzuleitung 54 ausgebildet. Durch ein Einleitungsrohr, das sich innerhalb der Leitung 52' erstreckt und von einem ringförmigen Luftspalt umgeben ist, wird Brennstoff zugeführt. Beim Durchströmen des Einleitungsrohrs, das beispielsweise in Form einer Keramikkapillare ausgebildet ist, verdampft der Brennstoff vollständig. Über seitliche Öffnungen 56 in einem Endabschnitt des Einleitungsrohrs gelangt der gasförmige Brennstoff in den restlichen Gasstrom. In den das Einleitungsrohr umgebenden Ringraum wird Luft bzw. ein Gemisch aus Luft, Wasser und/oder anderen Edukten eingeleitet, so wie auch in die anderen Leitungen 52, die nicht mit Einleitungsrohren versehen sind.

Ziel ist es, den Brennstoff vorständig verdampft, aber noch nicht chemisch zersetzt in den Gasstrom einzubringen. Zu diesem Zweck ist hier die Leitung 52' so ausgebildet, dass dort eine niedrigere Temperatur T₂ herrscht als die Temperatur T₁ in den anderen Leitungen 52. Das wird hier erreicht, indem die Wand 58 der Leitung 52' mit einem schlecht wärmeleitenden Material versehen ist oder ganz aus einem solchen besteht.

Die Leitung 52' kann beispielsweise mit einer Keramikauskleidung in Form eines zusätzlich in die Leitung 52' eingesetzten Keramikrohrs versehen sein, als doppelwandiges Rohr mit Luft- oder Vakuumspalt ausgebildet sein, oder die Leitung 52' kann dickwandiger ausgebildet sein als die anderen Leitungen 52.

In diesem Beispiel ist nur eine der Leitungen 52 mit einer Brennstoffzuleitung 54 versehen, es könnten jedoch auch mehrere der Leitungen 52 so ausgebildet sein.

Figur 5 zeigt den Einsatz eines derartigen Wärmetauschers 20' in einer Variante des oben beschriebenen Bauteils. Im Bauteil 31' ist neben der Zuleitung 42 für Luft und/oder Wasser eine separate Zuleitung 42' vorgesehen, durch die Brennstoff in die Reformerkammer 32 eingeleitet wird. Die Zuleitung 42' entspricht der oben beschriebenen Leitung 52'. Wie bei dieser ist die Wand 58 der Zuleitung 42' mit einem schlecht wärmeleitenden Material versehen (oder besteht aus einem solchen). Dies ist hier durch die Auskleidung mit einem zusätzlichen Keramikrohr erreicht. In der Zuleitung 42' ist parallel zu dieser eine Brennstoffzuleitung 54 in Form eines Einleitungsrohres angeordnet, hier in Form einer Keramikkapillare, das seitliche Öffnungen 56 aufweist, durch das der Brennstoff in den das Einleitungsrohr umgebenden Ringspalt strömt.

In den das Einleitungsrohr umgebenden Ringspalt können zusätzlich Luft und/oder andere Edukte zugeführt werden.

Die Zuleitung 42' ist in diesem Beispiel stromabwärts der Zuleitung 42 und auch leicht stromabwärts der heißesten Zone 60 des Brenners 16 angeordnet, so dass im Bereich der Brennstoffeinleitung genügend thermische Energie zur vollständigen Verdampfung des Brennstoffs zur Verfügung steht.

Das Einleitungsrohr ragt nicht in die Reformerkammer 32 hinein, sondern liegt vollständig innerhalb der radial an die Reformerkammer 32 angesetzten Zuleitung 42'.

Unterhalb der Zuleitung 42' sind in diesem Beispiel in der Reformerkammer 32 mehrere Mischelemente 62 in Form von Metall- oder Keramikplatten vorgesehen, die die Vermischung zwischen der durch die Zuleitung 42 zugeführten Edukte und den durch die Zuleitung 42' zugeführten Edukten verbessern.

Es wäre auch möglich, nur die Zuleitung 42' vorzusehen (auch bei der in Fig. 2 dargestellten Ausführungsform) und über diese sämtliche Edukte dem Reformer 14 zuzuführen.

Das Bauteil 31, 31' als integrierte Baugruppe aus zwei Wärmetauschern 20 (bzw. 20'), 22, Reformer 14 und katalytischem Brenner 16 ist auch unabhängig von dem beschriebenen Brennstoffzellensystem 10 oder auch in anderen Bereichen einsetzbar, wo eine kompakte Anlage zur Erzeugung von wasserstoffhaltigem Gas benötigt wird.

Die beschriebene Einleitung des Brennstoffs in den Luftstrom lässt sich auch in anderen Reformern oder auf anderen technischen Gebieten einsetzen.

## Patentansprüche

1. Brennstoffzellensystem mit wenigstens einer Brennstoffzelle (12), einem Reformer (14) zur Erzeugung eines wasserstoffhaltigen Gases aus einem Brennstoff, einem der Brennstoffzelle (12) nachgeschalteten Brenner zur thermischen Umsetzung von Abgasen der Brennstoffzelle (12) und
einem ersten Wärmetauscher (20), der dem Reformer (14) vorgeschaltet und dem Brenner (16) nachgeschaltet ist und in dem ein Wärmeübergang von Abgasen stromabwärts des Brenners (16) zu Edukten stromaufwärts des Reformers (14) erfolgt, und
einem zweiten Wärmetauscher (22), der dem Reformer (14) nachgeschaltet und dem Brenner (16) vorgeschaltet ist und in dem ein Wärmeübergang von Produktgasen stromabwärts des Reformers (14) zu dem Brenner (16) zugeführten Gasen stromaufwärts des Brenners (16) erfolgt.

2. Brennstoffzellensystem nach Anspruch 1, **dadurch gekennzeichnet, dass** die Edukte Brennstoff, Wasser und Luft umfassen.

3. Brennstoffzellensystem nach einem der vorhergehenden Ansprüche, **dadurch gekennzeichnet, dass** der Reformer (14) und der Brenner (16) so angeordnet sind, dass ein Festkörper-Wärmeübergang vom Brenner (16) zum Reformer (14) erfolgt.

4. Brennstoffzellensystem nach Anspruch 3, **dadurch gekennzeichnet, dass** der Reformer (14) eine Reformerkammer (32) aufweist, in der die Umsetzung des Brennstoffs erfolgt, und der Brenner (16) eine Brennerkammer (34) aufweist, in der die Umsetzung des Abgases der Brennstoffzelle (12) erfolgt, wobei der Reformer (14) und der Brenner (16) räumlich so zueinander angeordnet sind, dass Reformerkammer (32) und die Brennerkammer (34) aneinander angrenzen.

5. Brennstoffzellensystem nach Anspruch 4, **dadurch gekennzeichnet, dass** die Reformerkammer (32) konzentrisch um die Brennerkammer (34) angeordnet ist.

6. Brennstoffzellensystem nach einem der vorhergehenden Ansprüche, **dadurch gekennzeichnet, dass** der erste Wärmetauscher (20) durch einen Einströmbereich des Reformers (14) und einen Ausströmbereich des Brenners (16) und der zweite Wärmetauscher (22) durch einen Ausströmbereich des Reformers (14) und einen Einströmbereich des Brenners (16) gebildet ist.

7. Brennstoffzellensystem nach einem der vorhergehenden Ansprüche, **dadurch gekennzeichnet, dass** die Strömungen durch den Reformer (14) und durch den Brenner (16) im Wesentlichen gegenläufig parallel oder senkrecht zueinander gerichtet sind.

8. Brennstoffzellensystem nach einem der vorhergehenden Anspruch, **dadurch gekennzeichnet, dass** ein dritter Wärmetauscher (24) vorgesehen ist, dessen Wärmeübertrag einstellbar ist und der stromabwärts des Reformers (14) angeordnet ist.

9. Brennstoffzellensystem nach Anspruch 8, **dadurch gekennzeichnet, dass** der dritte Wärmetauscher (24) mit einer Kühlvorrichtung (26) mit einstellbarer Kühlleistung verbunden ist.

10. Brennstoffzellensystem nach Anspruch 9, **dadurch gekennzeichnet, dass** wenigstens ein Temperatursensor (30) stromabwärts des dritten Wärmetauschers (24) vorgesehen ist, aufgrund dessen Daten die Kühlleistung der Kühlvorrichtung (26) eingestellt wird.

11. Brennstoffzellensystem nach einem der vorhergehenden Ansprüche, **dadurch gekennzeichnet, dass** eine Reinigungsstufe (18) für das Reformatgas stromabwärts des Reformers (14) vorgesehen ist.

12. Brennstoffzellensystem nach einem der vorhergehenden Ansprüche, **dadurch gekennzeichnet, dass** eine Steuerung (43) vorgesehen ist, die eine Temperatur im Reformer (14) und/oder im Brenner (16) erfasst, sowie Dosiervorrichtungen (45), die eine Dosierung der einzelnen, dem Reformer (14) zugeführten Komponenten erlauben, so dass der Brennstoff stets vollständig gasförmig in den Reformer (14) gelangt.

13. Brennstoffzellensystem nach einem der vorhergehenden Ansprüche, **dadurch gekennzeichnet, dass** der erste Wärmetauscher (20') wenigstens zwei Leitungen (52, 52') zur Zufuhr von Brennstoff, Luft und/oder Wasser zum Reformer (14) aufweist, wobei in der Leitung (52'), durch die Brennstoff zugeführt wird, eine niedrigere Temperatur (T₂) herrscht als in der Leitung (52), durch die nur Luft und/oder Wasser geführt wird.

14. Brennstoffzellensystem nach Anspruch 13, **dadurch gekennzeichnet, dass** in der Leitung (52') eine Brennstoffzuleitung (54) angeordnet ist, die im Inneren der Leitung (52') gelegene Öffnungen (56) aufweist, durch die der Brennstoff in den Luft- und/oder Wasserstrom in der Leitung (52') gelangt.
